# EUROPÄISCHE PATENTANMELDUNG

(11) **EP 4 503 419 A1**
(43) Veröffentlichungstag der Anmeldung: **05.02.2025**
(21) Anmeldenummer: 23189780.2
(22) Anmeldetag: 04.08.2023
(51) Int. Cl.: H02M 3/156, H02M 1/32, H02M 3/06

(54) **ELEKTRONISCHE SCHALTUNG ZUR ELEKTRISCHEN LEISTUNGSAUFNAHME AUS EINEM VERSORGUNGSSPANNUNGSKREIS**

(71) Anmelder: Siemens Aktiengesellschaft, 80333 München (DE)
(72) Erfinder: Schönleitner, Arnold, 3002 Purkersdorf (AT); Paul, Wolfgang, 2344 Maria Enzersdorf (AT)
(74) Vertreter: Siemens Patent Attorneys

(57) **Zusammenfassung**

Die Erfindung betrifft eine Elektronische Schaltung (ES) zur elektrischen Leistungsaufnahme aus einem Versorgungsspannungskreis (IN), wobei der Versorgungsspannungskreis (IN) eine Versorgungsspannung (U_IN) aufweist;
dadurch gekennzeichnet, dass die elektronische Schaltung (ES) eine Spannungswandlungsschaltung (SWS) umfasst, welche dazu ausgebildet ist, die Versorgungsspannung (U_IN) in eine interne Spannung (U_INT) umzuwandeln;
dass die elektronische Schaltung (ES) eine elektrische Widerstandsanordnung (R) umfasst, die zur elektrischen Leistungsaufnahme ausgebildet ist und zumindest einen elektrischen Widerstand (R1...R18) umfasst;
und, dass die elektronische Schaltung (ES) einen ersten elektronischen Schalter (FET1) umfasst, der dazu ausgebildet ist, einen über die interne Spannung (U_INT) gespeisten Stromkreis, welcher über die elektrische Widerstandsanordnung (R) verläuft, zu schließen und zu öffnen.

## Beschreibung

*Unabhängig vom grammatikalischen Geschlecht eines bestimmten Begriffes sind Personen mit männlicher, weiblicher oder anderer Geschlechteridentität mit umfasst.*

### BESCHREIBUNGSEINLEITUNG

Die Erfindung betrifft eine elektronische Schaltung zur elektrischen Leistungsaufnahme aus einem Versorgungsspannungskreis, wobei der Versorgungsspannungskreis eine Versorgungsspannung aufweist, gemäß dem Oberbegriff des Patentanspruchs 1. Außerdem betrifft die Erfindung ein Verfahren zum Betrieb einer elektronischen Schaltung.

### STAND DER TECHNIK

Derartige elektronische Schaltungen, die auch als Bremschoppermodule bekannt sind, finden beispielsweise im Spannungszwischenkreis von Stromrichtern Anwendung. Sie nehmen eine elektrische Rückspeiseleistung bzw. elektrische Rückspeiseenergie auf, die typischerweise von Antrieben im Bremsbetrieb entsteht, und wandeln diese in thermische Energie um, um das Ansteigen einer Zwischenkreis- bzw. Versorgungsspannung zu limitieren.

Eine bekannte, besonders leistungsfähige Anwendung ist jene der Straßenbahn, welche die Rückspeiseenergie in Lastwiderstände rückspeist, welche am Dach der Straßenbahn montiert sind.

In der industriellen Anwendung treten Rückspeiseleistungen im Bereich von 10...1000W auf, die Dauer der Rückspeisephase liegt im Bereich von 100ms bis zu wenigen Sekunden. Die Rückspeiseenergie muss auch hier in thermische Energie umgewandelt werden, da ein Zwischenspeichern in einen Kondensator oder Sekundärzellen in irgendeiner Form dann wieder aus dem Zwischenspeicher entnommen werden muss. Analog zur Straßenbahn erfolgt das mit leistungsfähigen, thermisch hoch belastbaren Lastwiderständen.

Das technische Problem liegt nun darin, dass je nach Bremsleistungen unterschiedlich große Ströme auftreten. Ein Auslegen der Schaltung bei 24V Systemen auf z.B. 26...28V als Aktivierungsschwelle muss bei großer Bremsleistung von 1000W etwa 40A aus dem DC-Netz entnehmen, die Widerstände sind dann mit 0,625Ohm dimensioniert. Wird diese elektronische Schalter bzw. dieses Bremschoppermodul nun bei 48V-Systemen eingesetzt und es sollen gleichermaßen 1000W entnommen werden, so ist bei einer Aktivierungsschwelle von 50...52V ein mittlerer Strom von 20A vonnöten. Bei unveränderten Widerständen bedeutet das ein getaktetes Aktivieren der Widerstände, hier z.B. mit einer Schaltfolge von 0A/80A, da die Widerstände unverändert bei 0,625Ohm bleiben und das bei 50V diesen hohen Strom ergibt.

Die genannte Schaltfolge läuft je nach beteiligten Ein- und Ausgangskapazitäten mit einer Takttfrequenz von einigen 100Hz bis in den unteren kHz-Bereich ab und führt zu massiven Störungen auf den Zuleitungen zur elektronischen Schaltung bzw. zum Bremschoppermodul, insbesondere aufgrund der Induktivität der Zuleitungen.

Eine weitere Problemstellung ist, dass bei geringeren erforderlichen aufzunehmenden Leistungen bzw. Bremsleistungen auch bei dem unteren Spannungsbereich kein dauerhaftes Durchschalten der elektrischen Widerstände durchgeführt werden kann, sondern ebenso eine gepulste Schaltfolge gefahren werden muss. Eine Bremsleistung mit 800W/26V führt zu einer Schaltfolge mit Pulsen von 0A/40A mit einem Tastverhältnis von 80%.

Mittelfrequent geschaltete Strompulse in dieser Größe führen nachvollziehbar zu hohen Spannungsschwankungen auf der DC-Versorgung, können instabiles Verhalten hervorrufen und stellen somit eine EMV-Störquelle dar.

Ein weiteres technisches Problem liegt darin, dass es beim Parallelschalten von mehreren elektronischen Schaltungen bzw. Bremschoppermodulen zu unkontrollierten Schaltfolgen kommt, da die elektronischen Schaltungen bzw. die Bremschoppermodule auf die schwankende DC-Spannung aufgrund der asynchron schaltenden Parallelgeräte reagieren müssen.

Der Erfindung liegt die Aufgabe zugrunde, eine elektronische Schaltung zur elektrischen Leistungsaufnahme aus einem Spannungszwischenkreis anzugeben, die für einen großen Bereich an unterschiedlichen Versorgungsspannungen bei gleichzeitig hoher Leistungsaufnahme geeignet ist und dabei minimale Störungen bzw. Rückwirkungen im Versorgungsspannungskreis und an Zuleitungen vom Versorgungsspannungskreis zur elektronischen Schaltung verursacht.

### LÖSUNG DER AUFGABE

Diese Aufgabe wird durch eine elektronische Schaltung der eingangs genannten Art mit den Merkmalen gemäß dem unabhängigen Patentanspruch gelöst. Diese Aufgabe wird außerdem durch ein Verfahren zum Betrieb einer erfindungsgemäßen elektronischen Schaltung gelöst. Vorteilhafte Ausführungsformen der vorliegenden Erfindung sind in den abhängigen Ansprüchen beschrieben.

Erfindungsgemäß erfolgt die Lösung der Aufgabe durch eine elektronischen Schaltung der eingangs genannten Art, bei der die elektronische Schaltung eine Spannungswandlungsschaltung umfasst, welche dazu ausgebildet ist, die Versorgungsspannung in eine interne Spannung umzuwandeln;
die elektronische Schaltung eine elektrische Widerstandsanordnung umfasst, die zur elektrischen Leistungsaufnahme ausgebildet ist und zumindest einen elektrischen Widerstand umfasst; und,
die elektronische Schaltung einen ersten elektronischen Schalter umfasst, der dazu ausgebildet ist, einen über die interne Spannung gespeisten Stromkreis, welcher über die elektrische Widerstandsanordnung verläuft, zu schließen und zu öffnen.

Durch diese Maßnahme findet eine Entkopplung der elektrischen Widerstandsanordnung und des ersten elektronischen Schalters vom Versorgungsspannungskreis statt, wodurch keine oder lediglich minimale Rückwirkungen durch die elektronische Schaltung auf den Versorgungsspannungskreis hervorgerufen werden. Außerdem ist die elektronische Schaltung damit für einen gro-ßen Bereich an unterschiedlichen Versorgungsspannungen bei gleichzeitig hoher elektrischer Leistungsaufnahme geeignet, da die elektrische Widerstandsanordnung auf die interne Spannung ausgelegt werden kann. Die elektrische Widerstandsanordnung dient schlussendlich zur Aufnahme der elektrischen Leistung und Abgabe dieser als thermische Leistung an die Umgebung.

Durch eine hohe Taktfrequenz der Spannungswandlungsschaltung kann mit Hilfe von kleinen Kondensatoren am Eingang der elektronischen Schaltung eine sehr gute Filterwirkung erzielt werden, so dass defacto ein Gleichstrom aufgenommen wird. Durch das Tastverhältnis kann die aufgenommene elektrische Leistung in sehr weitem Bereich genau geregelt werden, womit ein Weitbereichsbetrieb möglich ist. Die Induktivität der Leitungen hat durch den aufgenommenen Gleichstrom auch keine Auswirkung mehr auf das Bremsverhalten.

Anspruchsgemäß umfasst die elektronische Schaltung einen ersten elektronischen Schalter, der dazu ausgebildet ist, einen über die interne Spannung gespeisten Stromkreis, welcher über die elektrische Widerstandsanordnung verläuft, zu schließen und zu öffnen. Mit anderen Worten bedeutet das, dass die elektronische Schaltung einen ersten elektronischen Schalter umfasst, der dazu ausgebildet ist, die elektrische Widerstandsanordnung mit der internen Spannung zu verbinden und von der internen Spannung zu trennen. Der erste elektronische Schalter kann dabei vor oder hinter der Widerstandsanordnung angeordnet sein.

Vorteilhaft ist es, wenn die Spannungswandlungsschaltung als DC-DC-Wandler, insbesondere als Hochsetzsteller, Tiefsetzsteller, Hoch-Tiefsetzsteller, Ćuk-Wandler, SEPIC-Wandler oder Zeta-Wandler, ausgebildet ist.

Diese Spannungswandlungsschaltungen haben sich als besonders geeignet für die Umwandlung der Versorgungsspannung in die interne Spannung herausgestellt. Außerdem führen diese Spannungswandlungsschaltungen zu geringen Rückwirkungen auf den Versorgungsspannungskreis, da damit die Schaltvorgänge des elektronischen Schalters vom versorgungsspannungskreis entkoppelt werden.

Weiters ist es vorteilhaft, wenn die elektrische Widerstandsanordnung eine Mehrzahl an in Serie und/oder parallel geschalteten elektrischen Widerständen umfasst.

Durch diese Maßnahme wird eine verbesserte Aufteilung der elektrischen Leistung auf die elektrischen Widerstände und damit eine verbesserte Abgabe der entstehenden thermischen Energie erreicht.

Vorteilhaft ist es, wenn die Spannungswandlungsschaltung einen zweiten elektronischen Schalter umfasst.

Besonders vorteilhaft ist es, wenn die interne Spannung unterschiedlich zur Versorgungsspannung ist, insbesondere größer als die Versorgungsspannung.

Durch diese Maßnahme kann die Widerstandsanordnung auf eine interne Spannung ausgelegt und für diese optimiert werden. Die Auslegung der Widerstandsanordnung ist damit im Wesentlichen unabhängig von der anliegenden Versorgungsspannung. Besonders vorteilhaft ist es, wenn die interne Spannung größer ist als die Versorgungsspannung, insbesondere größer als die größte zu erwartende Versorgungsspannung. Ebenfalls vorteilhaft ist es, wenn die interne Spannung kleiner ist als die Versorgungsspannung, insbesondere kleiner als die kleinste zu erwartende Versorgungsspannung.

Vorteilhaft ist es, wenn die elektronische Schaltung eine erste Regelungsschaltung umfasst, die dazu ausgebildet ist, den ersten elektronischen Schalter in Abhängigkeit der internen Spannung anzusteuern.

Durch diese Maßnahme kann die von der elektrischen Widerstandsanordnung aufgenommene Leistung in Abhängigkeit der internen Spannung gesteuert werden. Bei einer hohen internen Spannung kann der erste elektronische Schalter derart angesteuert werden, dass die elektrische Widerstandsanordnung eine große elektrische Leistung aufnimmt. Bei einer niedrigen internen Spannung kann der erste elektronische Schalter derart angesteuert werden, dass die elektrische Widerstandsanordnung eine kleine (oder gar keine) elektrische Leistung aufnimmt.

Vorteilhaft ist es, wenn die elektronische Schaltung eine zweite Regelungsschaltung umfasst, die dazu ausgebildet ist, die Spannungswandlungsschaltung, insbesondere den zweiten elektronischen Schalter, in Abhängigkeit der Versorgungsspannung anzusteuern.

Durch diese Maßnahme kann die Versorgungsspannung, insbesondere deren Wert, dazu verwendet werden, die elektrische Leistungsaufnahme der elektronischen Schaltung aus dem Versorgungsspannungskreis zu regeln. Bei einer höheren Versorgungsspannung kann die Spannungswandlungsschaltung derart angesteuert werden, dass sie eine größere elektrische Leistung aufnimmt bzw. an die elektrische Widerstandsanordnung überträgt. Bei einer kleineren Versorgungsspannung kann die Spannungswandlungsschaltung derart angesteuert werden, dass sie eine geringere (oder gar keine) elektrische Leistung aufnimmt bzw. an die elektrische Widerstandsanordnung überträgt. Die Spannungswandlungsschaltung wird damit nicht in bekannter Art und Weise verwendet, bei der eine Regelung eine variable Eingangsspannung auf eine konstante Ausgangsspannung ausregelt und die geregelte Größe die Ausgangsspannung ist. Ebenso besteht der Unterschied zu bekannten Regelungen für Spannungswandlungsschaltungen darin, dass die aufgenommene bzw. übertragene elektrische Leistung mit steigender Zielspannung (=Versorgungsspannung), und nicht mit sinkender Zielspannung, hochgeregelt wird. Die Aufgabe der Erfindung wird weiters gelöst durch ein Verfahren zum Betrieb einer elektronischen Schaltung nach einem der Ansprüche 1 bis 7, wobei die Spannungswandlungsschaltung die Versorgungsspannung in die interne Spannung umwandelt.

Durch diese Maßnahme ist die aufnehmbare elektrische Leistung der elektronischen Schaltung nicht abhängig von der Versorgungsspannung. Die Auslegung der elektrischen Widerstandsanordnung (bzgl. Ohm-Wert, Wärmekapazität und Wärmeabfuhr) definiert die aufnehmbare elektrische Leistung der elektronischen Schaltung unabhängig von der Versorgungsspannung. Eine aufgenommene elektrische Leistung von beispielsweise 1000W kann in einem gesamten Bereich von beispielsweise 20V...60V bei einer unveränderten elektrischen Widerstandanordnung gleichermaßen zur Verfügung gestellt werden.

Vorteilhaft ist es, wenn die interne Spannung höher als die höchste zu erwartende Versorgungsspannung oder niedriger als die niedrigste zu erwartende Versorgungsspannung im jeweiligen Betriebspunkt ist.

Besonders vorteilhaft ist es, wenn die interne Spannung größer als die Versorgungsspannung ist.

Durch diese Maßnahmen kann die elektrische Schaltung für einen weiteren Bereich an unterschiedlichen Versorgungsspannungen eingesetzt werden.

Vorteilhaft ist es, wenn der erste elektronische Schalter in Abhängigkeit der internen Spannung angesteuert wird.

Durch diese Maßnahme kann die von der elektrischen Widerstandsanordnung aufgenommene Leistung in Abhängigkeit der internen Spannung gesteuert werden. Bei einer hohen internen Spannung kann der erste elektronische Schalter derart angesteuert werden, dass die elektrische Widerstandsanordnung eine große elektrische Leistung aufnimmt. Bei einer niedrigen internen Spannung kann der erste elektronische Schalter derart angesteuert werden, dass die elektrische Widerstandsanordnung eine kleine (oder gar keine) elektrische Leistung aufnimmt.

Weiters ist es vorteilhaft, wenn für die interne Spannung ein Sollbereich vorgegeben wird;
der erste elektronische Schalter in einen dauerhaft leitenden Zustand geschalten wird, wenn die interne Spannung über dem Sollbereich liegt;
der erste elektronische Schalter in einen dauerhaft sperrenden Zustand geschalten wird, wenn die interne Spannung unter dem Sollbereich liegt; und
der erste elektronische Schalter mit einer ersten Schaltfolge, welche eine erste Taktfrequenz aufweist, angesteuert wird, durch die der erste elektronische Schalter abwechselnd in einen leitenden und in einen sperrenden Zustand geschalten wird, wenn die interne Spannung im Sollbereich liegt.

Durch diese Maßnahme kann die durch die elektrische Widerstandsanordnung aufgenommene elektrische Leistung noch besser angepasst werden.

Weiters ist es vorteilhaft, wenn eine über die Spannungswandlungsschaltung übertragene elektrische Leistung in Abhängigkeit der Versorgungsspannung geregelt wird.

Durch diese Maßnahme kann auf die im Versorgungsspannungskreis herrschenden Spannungsverhältnisse besser reagiert werden. Eine höhere Versorgungsspannung bedeutet beispielsweise, dass eine Rückspeisung von elektrischer Leistung in den Versorgungsspannungskreis stattfindet. In diesem Fall muss die von der Spannungswandlungsschaltung übertragene elektrische Energie erhöht werden. Diese elektrische Energie kann anschließend von der elektrischen Widerstandsanordnung aufgenommen werden.

Besonders vorteilhaft ist es, wenn für die Versorgungsspannung ein Sollwert oder ein Sollbereich vorgegeben wird und, dass dieser Sollwert oder Sollbereich mit steigender übertragener Leistung der Spannungswandlungsschaltung angehoben wird.

Durch diese Maßnahme wird ein Parallelbetrieb mehrerer elektronischer Schaltungen bzw. Bremschoppermodule ermöglicht. Wird die Regelung der Spannungswandlungsschaltung so beeinflusst, dass bei steigender elektrischer Leistungsaufnahme bzw. elektrischer Stromaufnahme der Sollwert bzw. der Sollbereich für die Regelspannung (=Versorgungsspannung) angehoben wird, dann erhält man eine sogenannte "weiche Kennlinie". Eine erste elektronische Schaltung regelt somit ihren Sollwert bzw. Sollbereich nach oben, eine parallelgeschaltete zweite elektronische Schaltung mit anfangs noch geringer Stromaufnahme hat weiterhin einen niedrigeren Sollwert bzw. Sollbereich und übernimmt damit mehr Strom. Auf diese Weise teilen sich die parallelgeschalteten Module die elektrische Leistungs- bzw. Stromaufnahme gleichermaßen auf.

Besonders vorteilhaft ist es, wenn der erste elektronische Schalter mit einer ersten Schaltfolge, welche eine erste Taktfrequenz aufweist, angesteuert wird;
die Spannungswandlungsschaltung mit einer zweiten Schaltfolge, welche eine zweite Taktfrequenz aufweist, angesteuert wird; und
die zweite Taktfrequenz größer als die erste Taktfrequenz ist.

Durch diese Maßnahme ist nach außen hin, also zum Versorgungsspannungskreis, nur die zweite, höhere Taktfrequenz der Spannungswandlungsschaltung wirksam. Eine hohe Taktfrequenz bedeutet, dass mit kleinen Komponenten Filterschaltungen aufgebaut werden können, welche eine Taktung der Spannungswandlungsschaltung so filtern, dass nach außen hin nur ein geringer Stromripple auftritt.

Vorteilhaft ist es, wenn die Spannungswandlungsschaltung über ein Deaktivierungssignal deaktiviert wird, wenn die interne Spannung einen festgelegten Wert übersteigt.

Durch diese Maßnahme wird die Sicherheit und Fehlertoleranz der elektronischen Schaltung erhöht.

### FIGURENBESCHREIBUNG

Im Folgenden wird die Erfindung anhand der in den Figuren dargestellten Ausführungsbeispiele näher beschrieben und erläutert.

Es zeigen beispielhaft:
Figur 1 zeigt eine beispielhafte Ausführungsvariante einer erfindungsgemäßen elektronische Schaltung,

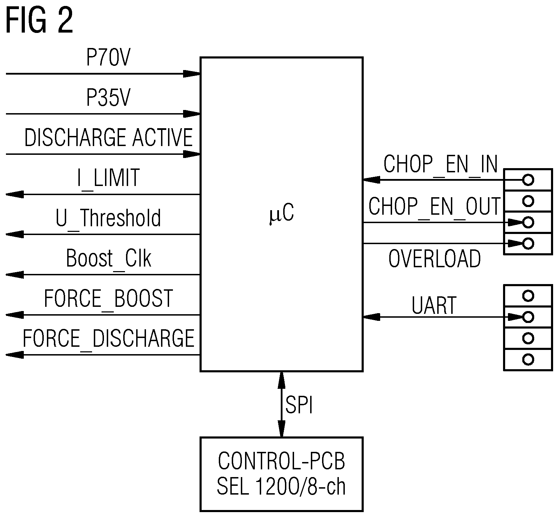

Figur 2 zeigt eine beispielhafte Ausführungsvariante einer Ansteuerung für einen Mikrocontroller für eine erfindungsgemäße elektronische Schaltung.

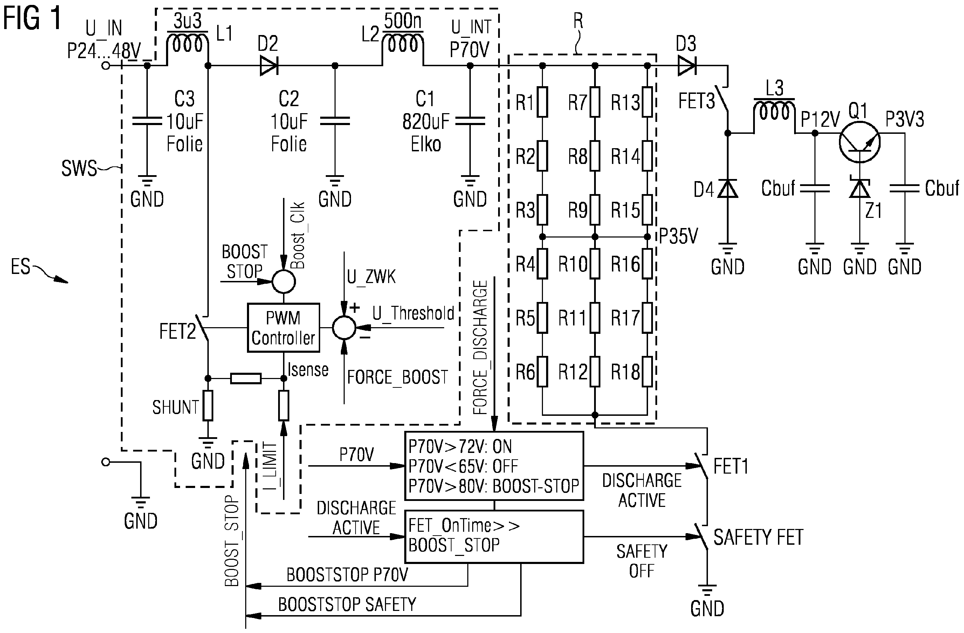

Fig. 1 zeigt eine beispielhafte Ausführungsvariante einer erfindungsgemäßen elektronische Schaltung.

Die elektrische Schaltung ES kann mit den beiden links dargestellten Anschlusspunkten mit einem Versorgungsspannungskreis IN verbunden werden. Der Versorgungsspannungskreis IN weist beispielsweise eine Versorgungsspannung U_IN von 24V bis 48V auf. In diesem Ausführungsbeispiel ist diese Versorgungsspannung U_IN eine Gleichspannung.

Die elektronische Schaltung umfasst eine elektrische Widerstandsanordnung R. In diesem Ausführungsbeispiel wird die elektrische Widerstandsanordnung aus 18 elektrischen Widerständen R1...R18 gebildet. Diese elektrischen Widerstände R1...R18 sind, wie in Fig. 1 dargestellt, in einer Kombination aus Serien- und Parallelschaltungen verschalten. Weiters umfasst die elektronische Schaltung ES einen ersten elektronischen Schalter FET1, der dazu ausgebildet ist, einen über die interne Spannung U_INT gespeisten Stromkreis, welcher über die elektrische Widerstandsanordnung R verläuft, zu schließen und zu öffnen. In diesem Ausführungsbeispiel ist der erste elektronische Schalter FET1 hinter der elektrischen Widerstandsanordnung R in Serie zu dieser angeordnet. Der erste elektronische Schalter FET1 kann beispielsweise auch vor der elektrischen Widerstandsanordnung R in Serie zu dieser angeordnet sein. Der erste elektronische Schalter FET1 wird über eine erste Regelungsschaltung angesteuert. Die erste Regelungsschaltung ist dazu ausgebildet, den ersten elektronischen Schalter FET1 in Abhängigkeit der internen Spannung U_INT anzusteuern. Der erste elektronische Schalter FET1 kann dabei so angesteuert werden, dass er durchgehend leitet, durchgehend sperrt oder, wenn er mit einer Schaltfolge angesteuert wird, abwechselnd leitet oder sperrt. Durch die Ansteuerung wird beeinflusst, welche elektrische Leistung von der elektrischen Widerstandsanordnung R aufgenommen wird. Die erste Schaltfolge weist dabei eine erste Taktfrequenz auf.

Der erste elektronische Schalter FET1 ist in diesem Ausführungsbeispiel als Feldeffekttransistor ausgeführt. Alternativ könnte beispielsweise ein Bipolartransistor eingesetzt werden.

In Serie zum ersten elektronischen Schalter FET1 kann ein elektronischer Sicherheitsschalter SAFETYFET angeordnet sein. Dieser wird im Fehlerfall, beispielsweise bei einem Ausfall oder einem Versagen des ersten elektronischen Schalters FET1, geöffnet, um den Stromkreis, der durch die interne Spannung U_INT gespeist wird und über die elektrische Widerstandsanordnung R verläuft, zu öffnen. Der elektronische Sicherheitsschalter SAFETYFET ist in diesem Ausführungsbeispiel als Feldeffekttransistor ausgeführt. Alternativ könnte beispielsweise ein Bipolartransistor eingesetzt werden.

Am Eingang der elektronischen Schaltung ES ist eine Spannungswandlungsschaltung SWS angeordnet. Die Spannungswandlungsschaltung SWS ist in diesem Ausführungsbeispiel ein Hochsetzsteller bzw. ein Boost-Konverter. Andere Arten von Spannungswandlungsschaltungen SWS, wie beispielsweise Tiefsetzsteller, Hoch-Tiefsetzsteller, Ćuk-Wandler, SEPIC-Wandler oder Zeta-Wandler, können ebenfalls zum Einsatz kommen. Die Spannungswandlungsschaltung SWS umfasst in diesem Ausführungsbeispiel unter anderem einen zweiten elektronischen Schalter FET2, einen ersten Kondensator C1, einen zweiten Kondensator C2, einen dritten Kondensator C3, eine erste Induktivität L1 und eine zweite Induktivität L2. Der zweite elektronische Schalter FET2 ist in diesem Ausführungsbeispiel als Feldeffekttransistor ausgeführt. Alternativ könnte beispielsweise ein Bipolartransistor eingesetzt werden.

Die Spannungswandlungsschaltung SWS wandelt die Versorgungsspannung U_IN in eine interne Spannung U_INT um, welche der elektrischen Widerstandsanordnung zugeführt wird. Die von der Spannungswandlungsschaltung SWS erzeugte interne Spannung U_INT ist bevorzugt höher als die Versorgungsspannung U_IN. Die Versorgungsspannung U_IN und die interne Spannung U_INT sind bevorzugt Gleichspannungen.

Die elektronische Schaltung ES umfasst weiters eine zweite Regelungsschaltung, die die Spannungswandlungsschaltung SWS ansteuert. Die zweite Regelungsschaltung umfasst im vorliegenden Ausführungsbeispiel einen PWM-Controller, der einen zweiten elektronischen Schalter FET2 der Spannungswandlungsschaltung SWS ansteuert. Die zweite Regelungsschaltung erzeugt eine zweite Schaltfolge, die eine zweite Taktfrequenz aufweist.

Aufgrund dieser zweistufigen Funktionsweise sind die Widerstände von der am Eingang anliegenden Versorgungsspannung entkoppelt.

In einem Ausführungsbeispiel reagiert die Spannungswandlungsschaltung SWS mit Hilfe der zweiten Regelungsschaltung auf eine zu hohe Versorgungsspannung U_IN. Dabei wird die Spannungswandlungsschaltung aktiv und entzieht dem Versorgungsspannungskreis elektrische Energie. Je höher die Versorgungsspannung U_IN über der Aktivierungsschwelle liegt, desto mehr elektrische Energie wird ihm entzogen. Diese elektrische Energie wird in diesem Ausführungsbeispiel vom Hochsetzsteller in eine höhere interne Spannung U_INT transformiert, sodass der ausgangsseitige Kondensator C1 der Spannungswandlungsschaltung SWS bzw. des Hochsetzstellers aufgeladen wird und die interne Spannung U_INT steigt.

Diese interne Spannung U_INT wird von der ersten Regelungsschaltung so geregelt, dass bei Erreichen der oberen Schaltschwelle (U_INT > U_INT_SOLL_HI) die elektrische Widerstandsanordnung R aktiviert wird, sodass der Kondensatoren C1 wieder entladen werden. Die Auslegung der elektrischen Widerstandsanordnung R muss so gewählt sein, dass diese bei Aktivierung mehr elektrische Energie aus dem Kondensator C1 entnehmen kann, als die Spannungswandlungsschaltung SWS bzw. der Hochsetzsteller maximal hinzufügen kann. Damit sinkt die interne Spannung U_INT am Kondensator C1, bis mit Unterschreiten der unteren Schaltschwelle (U_INT < U_INT_SOLL_LO) die elektrische Widerstandsanordnung R wieder deaktiviert wird. Die interne Spannung U_INT am Kondensatoren C1 steigt daraufhin wieder.

Sollte der Versorgungsspannungskreis nur wenig überschießende elektrische Energie liefern können, dann wird die Spannungswandlungsschaltung SWS bzw. der Hochsetzsteller mit geringerer elektrischer Leistung betrieben, um ein Spannungsgleichgewicht (die zweite Regelungsschaltung regelt auf eine konstante Versorgungsspannung) am Eingang zu halten. Mit geringerer elektrischer Leistung an der Spannungswandlungsschaltung SWS bzw. am Hochsetzsteller wird der Kondensator C1 langsamer aufgeladen. Die elektrische Widerstandsanordnung R muss nicht so häufig eingeschaltet werden, d.h. sie taktet seltener. Auch ist deren Aktivzeit geringer, weil bei geringerer elektrischer Leistungszufuhr und unveränderter elektrischer Leistungsentnahme (durch die elektrische Widerstandsanordnung R) der Kondensator C1 rascher die untere Schaltschwelle erreicht.

Ein wesentlicher Vorteil der Erfindung ist, dass durch die anspruchsgemäße Schaltung eine zweite Taktfrequenz für die Spannungswandlungsschaltung SWS, welche beispielsweise in einem Bereich von 20kHz bis 300kHz liegt, höher als eine erste Taktfrequenz für den ersten elektronischen Schalter FET1, welche beispielsweise in einem Bereich von 100Hz bis 2kHz liegt, sein kann. Dadurch ist nach außen hin, also zum Versorgungsspannungskreis, nur die zweite, größere Taktfrequenz der Spannungswandlungsschaltung wirksam. Eine große Taktfrequenz bedeutet, dass mit kleinen Komponenten Filterschaltungen aufgebaut werden können, welche eine Taktung der Spannungswandlungsschaltung so filtern, dass nach außen hin nur ein geringer Stromripple auftritt.

Darüber hinaus gibt es noch ein Lastaufteilungsmanagement, um mehrere elektronische Schaltungen parallel an einem gemeinsamen Versorgungsspannungskreis betreiben zu können. Dies erfolgt über eine geneigte Steuerkennlinie, bei der bei einer steigenden aufgenommenen elektrischen Leistung die Spannung, auf die geregelt wird (z.B. 26V bei einer 24V-Nennspannung oder 50V bei 48V Nennspannung) mit steigender elektrischer Leistung ansteigt. Als ein typischer Wert sei hier bei 24V ein Einsetzen der Bremswirkung bei 26V zu sehen, bei maximaler Leistungsaufnahme würde diese dann auf z.B. 27V steigen. Eine parallele elektrische Schaltung mit einer Brems-Einsetzspannung von z.B. 26,2V (bedingt bspw. durch toleranzbedingt abweichende Bauteilwerte) würde somit bei steigender Leistungsaufnahme durch die erste elektrische Schaltung ebenfalls aktiv werden und unterstützen. Somit beginnen die elektrischen Schaltungen erst mit einer niedrigen elektrischen Leistungsaufnahme und steigern diese mit zunehmender Spannung am Versorgungsspannungskreis. So haben die anderen parallelen elektrischen Schaltungen eine Chance, auch einen Teil der elektrischen Leistung zum Abbau der Versorgungsspannung übernehmen können.

Der in Fig. 1 rechts dargestellte Teil der elektronischen Schaltung, beginnend ab der Diode D3, ist eine Teilschaltung zur Bereitstellung einer 12V- und einer 3,3V-Versorgungsspannung zur Versorgung von weiteren Komponenten der elektronischen Schaltung, beispielsweise eines Mikrocontrollers.

### Bezugszeichenliste

- ES: Elektronische Schaltung
- IN: Versorgungsspannungskreis
- U_IN: Versorgungsspannung
- U_IN_SOLL: Sollwert/Sollbereich der Versorgungsspannung
- U_INT: Interne Spannung
- U_INT_SOLL: Sollbereich der internen Spannung
- R: Elektrische Widerstandsanordnung
- R1...R18: Elektrischer Widerstand
- FET1: Erster elektronischer Schalter
- FET2: Zweiter elektronischer Schalter
- SAFETYFET: Elektronischer Sicherheitsschalter
- SWS: Spannungswandlungsschaltung

## Patentansprüche

1. Elektronische Schaltung (ES) zur elektrischen Leistungsaufnahme aus einem Versorgungsspannungskreis (IN), wobei der Versorgungsspannungskreis (IN) eine Versorgungsspannung (U_IN) aufweist;
**dadurch gekennzeichnet, dass** die elektronische Schaltung (ES) eine Spannungswandlungsschaltung (SWS) umfasst, welche dazu ausgebildet ist, die Versorgungsspannung (U_IN) in eine interne Spannung (U_INT) umzuwandeln;
dass die elektronische Schaltung (ES) eine elektrische Widerstandsanordnung (R) umfasst, die zur elektrischen Leistungsaufnahme ausgebildet ist und zumindest einen elektrischen Widerstand (R1...R18) umfasst;
und, dass die elektronische Schaltung (ES) einen ersten elektronischen Schalter (FET1) umfasst, der dazu ausgebildet ist, einen über die interne Spannung (U_INT) gespeisten Stromkreis, welcher über die elektrische Widerstandsanordnung (R) verläuft, zu schließen und zu öffnen.

2. Elektronische Schaltung (ES) nach Anspruch 1, **dadurch gekennzeichnet, dass** die Spannungswandlungsschaltung (SWS) als DC-DC-Wandler, insbesondere als Hochsetzsteller, Tiefsetzsteller, Hoch-Tiefsetzsteller, Ćuk-Wandler, SEPIC-Wandler oder Zeta-Wandler, ausgebildet ist.

3. Elektronische Schaltung (ES) nach einem der vorangehenden Ansprüche, **dadurch gekennzeichnet, dass** die elektrische Widerstandsanordnung (R) eine Mehrzahl an in Serie und/oder parallel geschalteten elektrischen Widerständen (R1...R18) umfasst.

4. Elektronische Schaltung (ES) nach einem der vorangehenden Ansprüche, **dadurch gekennzeichnet, dass** die Spannungswandlungsschaltung (SWS) einen zweiten elektronischen Schalter (FET2) umfasst.

5. Elektronische Schaltung (ES) nach einem der vorangehenden Ansprüche, **dadurch gekennzeichnet, dass** die interne Spannung (U_INT) unterschiedlich zur Versorgungsspannung (U_IN) ist, insbesondere größer als die Versorgungsspannung (U_IN).

6. Elektronische Schaltung (ES) nach einem der vorangehenden Ansprüche, **dadurch gekennzeichnet, dass** die elektronische Schaltung (ES) eine erste Regelungsschaltung umfasst, die dazu ausgebildet ist, den ersten elektronischen Schalter (FET1) in Abhängigkeit der internen Spannung (U_INT) anzusteuern.

7. Elektronische Schaltung (ES) nach einem der vorangehenden Ansprüche, **dadurch gekennzeichnet, dass** die elektronische Schaltung (ES) eine zweite Regelungsschaltung umfasst, die dazu ausgebildet ist, die Spannungswandlungsschaltung (SWS), insbesondere den zweiten elektronischen Schalter (FET2), in Abhängigkeit der Versorgungsspannung (U_IN) anzusteuern.

8. Verfahren zum Betrieb einer elektronischen Schaltung (ES) nach einem der Ansprüche 1 bis 7, **dadurch gekennzeichnet, dass** die Spannungswandlungsschaltung (SWS) die Versorgungsspannung (U_IN) in die interne Spannung (U_INT) umwandelt.

9. Verfahren nach Anspruch 8, **dadurch gekennzeichnet, dass** die interne Spannung (U_INT) höher als die höchste zu erwartende Versorgungsspannung (U_IN) oder niedriger als die niedrigste zu erwartende Versorgungsspannung (U_IN) im jeweiligen Betriebspunkt ist.

10. Verfahren nach einem der Ansprüche 8 oder 9, **dadurch gekennzeichnet, dass** die interne Spannung (U_INT) größer als die Versorgungsspannung (U_IN) ist.

11. Verfahren nach einem der Ansprüche 8 bis 10, **dadurch gekennzeichnet, dass** der erste elektronische Schalter (FET1) in Abhängigkeit der internen Spannung (U_INT) angesteuert wird.

12. Verfahren nach einem der Ansprüche 8 bis 11, **dadurch gekennzeichnet, dass** für die interne Spannung (U_INT) ein Sollbereich (U_INT_SOLL) vorgegeben wird, dass der erste elektronische Schalter (FET1) in einen dauerhaft leitenden Zustand geschalten wird, wenn die interne Spannung (U_INT) über dem Sollbereich (U_INT_SOLL) liegt, dass der erste elektronische Schalter (FET1) in einen dauerhaft sperrenden Zustand geschalten wird, wenn die interne Spannung (U_INT) unter dem Sollbereich (U_INT_SOLL) liegt und, dass der erste elektronische Schalter (FET1) mit einer ersten Schaltfolge, welche eine erste Taktfrequenz aufweist, angesteuert wird, durch die der erste elektronische Schalter (FET1) abwechselnd in einen leitenden und in einen sperrenden Zustand geschalten wird, wenn die interne Spannung (U_INT) im Sollbereich (U_INT_SOLL) liegt.

13. Verfahren nach einem der Ansprüche 8 bis 12, **dadurch gekennzeichnet, dass** eine über die Spannungswandlungsschaltung (SWS) übertragene elektrische Leistung in Abhängigkeit der Versorgungsspannung (U_IN) geregelt wird.

14. Verfahren nach einem der Ansprüche 8 bis 13, **dadurch gekennzeichnet, dass** für die Versorgungsspannung (U_IN) ein Sollwert oder ein Sollbereich (U_IN _SOLL) vorgegeben wird und, dass dieser Sollwert oder Sollbereich (U_IN_SOLL) mit steigender übertragener Leistung der Spannungswandlungsschaltung (SWS) angehoben wird.

15. Verfahren nach einem der Ansprüche 8 bis 14, **dadurch gekennzeichnet, dass** der erste elektronische Schalter (FET1) mit einer ersten Schaltfolge, welche eine erste Taktfrequenz aufweist, angesteuert wird, dass die Spannungswandlungsschaltung (SWS) mit einer zweiten Schaltfolge, welche eine zweite Taktfrequenz aufweist, angesteuert wird und, dass die zweite Taktfrequenz größer als die erste Taktfrequenz ist.
